# EUROPEAN PATENT APPLICATION

(11) **EP 4 672 442 A1**
(43) Date of publication of application: **31.12.2025**
(21) Application number: 24883962.3
(22) Date of filing: 21.06.2024
(51) Int. Cl.: H01M 50/124

(54) **CASE AND PREPARATION METHOD THEREFOR, BATTERY, AND ELECTRIC DEVICE**

(30) Priority: 03.11.2023 CN 202311460726
(71) Applicant: Contemporary Amperex Technology Co., Limited, Jiaocheng District Ningde Fujian 352100 (CN)
(72) Inventor: WU, Kai, Ningde, Fujian 352100 (CN); LI, Jingli, Ningde, Fujian 352100 (CN); PENG, Longqing, Ningde, Fujian 352100 (CN); LI, Ting, Ningde, Fujian 352100 (CN); WANG, Rongsheng, Ningde, Fujian 352100 (CN); JI, Xing, Ningde, Fujian 352100 (CN)
(74) Representative: Lorenz Seidler Gossel Part. mbB
(86) International application number: PCT/CN2024/100771
(87) International publication number: WO 2025/091952

(57) **Abstract**

A case (100) and a preparation method therefor, a battery (5), and an electric device. The case (100) includes a thermally conductive insulating layer (130). The thermally conductive insulating layer (130) is provided on at least part of an inner surface of the case (100). A thermal conductivity coefficient of the thermally conductive insulating layer (130) ranges from 0.03 W/mK to 10 W/mK, and a resistance of the thermally conductive insulating layer (130) at a high voltage of 1000 V ranges from 100 MΩ to 100 GΩ.

## Description

### TECHNICAL FIELD

The present application relates to the field of batteries, and in particular, to a case and a preparation method therefor, a battery, and an electric device.

### BACKGROUND

Batteries have been not only applied to energy storage power systems of hydropower, thermal power, wind power and solar power stations, but also widely applied to electric traffic tools such as electric bicycles, electric motorcycles, and electric vehicles, as well as to various fields such as military equipment and aerospace. With improvement of energy density of the batteries and reduction of the manufacturing costs, people have higher demands on the charging speed of the batteries. On the one hand, the acceleration of the charging speed is favorable to market demands, but on the other hand, during rapid charging, a heavier charging current indicates more irreversible heat generated inside the battery, and an electrode assembly cannot dissipate heat in time, so that the surface temperature of the battery rises, and the risk of thermal runaway of the battery is increased.

### SUMMARY

In view of the technical problems in the background art, the present application provides a case, which is capable of improving the heat dissipation effect of the case and reducing the occurrence probability of thermal runaway of a battery.

In a first aspect of the present application, a case is provided, which includes a thermally conductive insulating layer. The thermally conductive insulating layer is provided on at least part of an inner surface of the case. A thermal conductivity coefficient of the thermally conductive insulating layer ranges from 0.03 W/mK to 10 W/mK, and a resistance of the thermally conductive insulating layer at a high voltage of 1000 V ranges from 100 MΩ to 100 GΩ.

According to the case provided by the present application, the thermally conductive insulating layer is provided on at least part of the inner surface of the case. By enabling the thermal conductivity coefficient and the resistance of the thermally conductive insulating layer to be within the above ranges, the thermal conductivity performance and the insulating performance of the thermally conductive insulating layer may be improved simultaneously. The occurrence risk of short circuit inside the case is reduced, and at the same time, after the temperature of the battery rises during rapid charging, the heat dissipation rate of the case may be increased, the heat dissipation effect of the case may be improved, the surface temperature of the battery may be lowered, and the occurrence probability of thermal runaway of the battery may be reduced.

According to some embodiments of the present application, the thermal conductivity coefficient of the thermally conductive insulating layer ranges from 0.2 W/mK to 10 W/mK, and the resistance of the thermally conductive insulating layer at the high voltage of 1000 V ranges from 500 MΩ to 50 GΩ. Therefore, the thermal conductivity performance and the insulating performance of the thermally conductive insulating layer is improved, and the heat dissipation effect of the case is improved.

According to some embodiments of the present application, a leakage current of the thermally conductive insulating layer ranges from 0 mA to 10 mA.

According to some embodiments of the present application, the leakage current of the thermally conductive insulating layer ranges from 0.01 mA to 1 mA.

Therefore, by enabling the leakage current of the thermally conductive insulating layer to be within the above ranges, the voltage withstanding performance of the thermally conductive insulating layer is improved.

According to some embodiments of the present application, the thermally conductive insulating layer includes 1 weight part to 50 weight parts of a thermally conductive filler and 50 weight parts to 95 weight parts of a prepolymer. Therefore, by enabling the contents of the thermally conductive filler and the prepolymer to be within the above ranges, the insulating performance and the thermal conductivity performance of the thermally conductive insulating layer may be improved, and the heat dissipation effect of the case may be improved.

According to some embodiments of the present application, the content of the thermally conductive filler ranges from 10 weight parts to 30 weight parts, and the content of the prepolymer ranges from 70 weight parts to 90 weight parts. Therefore, the insulating performance and the thermal conductivity performance of the thermally conductive insulating layer are improved, and the heat dissipation effect of the case is improved.

According to some embodiments of the present application, the thermally conductive filler includes one or more of inorganic particles having a dielectric constant of 5 or above and inorganic particles having ionic conductivity but storing no ions. Therefore, the thermal conductivity performance of the thermally conductive insulating layer is improved, and the heat dissipation effect of the case is improved.

According to some embodiments of the present application, the inorganic particles having a dielectric constant of 5 or above include one or more of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydrate, silicon carbide, boron carbide, aluminum nitride, silicon nitride, boron nitride, magnesium fluoride, calcium fluoride, barium fluoride, barium sulfate, aluminum magnesium silicate, lithium magnesium silicate, sodium magnesium silicate, bentonite, hectorite, zirconium titanate, barium titanate, Pb(Zr,Ti)O₃, Pb₁₋ₘLaₘZr₁₋ₙTiₙO₃, Pb(Mg_{1/3}Nb_{2/3})O₃₋PbTiO₃, and respective modified inorganic particles thereof, 0<m<1, and 0<n<1. Therefore, the thermal conductivity performance of the thermally conductive insulating layer is improved, and the heat dissipation effect of the case is improved.

According to some embodiments of the present application, the inorganic particles having ionic conductivity but storing no ions include one or more of Li₃PO₄, lithium titanium phosphate Liₓ1Ti_{y1}(PO₄)₃, lithium titanium aluminum phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7. Therefore, the thermal conductivity performance of the thermally conductive insulating layer is improved, and the heat dissipation effect of the case is improved.

According to some embodiments of the present application, the prepolymer includes one or more of polyimide, phenolic resin, urea resin, or epoxy resin. Therefore, the prepolymer of the above type may improve the insulating performance and the electrolyte solution-resistant performance of the thermally conductive insulating layer, and may improve the stability of the thermally conductive insulating layer.

According to some embodiments of the present application, the thermally conductive insulating layer further includes at least one of a dispersant and a curing agent. Therefore, the uniformity and the curing rate of the thermally conductive insulating layer are improved.

According to some embodiments of the present application, the dispersant includes one or more of sodium carboxymethyl cellulose, styrene-butadiene rubber, polyvinylpyrrolidone, lauryl sodium sulfate, methyl anyl alcohol, polyacrylamide, or guar gum. Therefore, the uniformity of the thermally conductive insulating layer is improved, the insulating performance and the thermal conductivity performance of the thermally conductive insulating layer are further improved, and the heat dissipation effect of the case is improved.

According to some embodiments of the present application, the curing agent includes one or more of hexamethylenetetramine, ethidene diamine, hexamethylenediamine, diethylenetriamine, triethylene tetramine, p-phenylenediamine, m-phenylenediamine, terephthalic acid, phenylenediacetic acid, maleic anhydride, or phthalic anhydride. Therefore, the curing rate of the thermally conductive insulating layer is improved.

According to some embodiments of the present application, a thickness of the thermally conductive insulating layer ranges from 1 µm to 1000 µm.

According to some embodiments of the present application, the thickness of the thermally conductive insulating layer ranges from 20 µm to 200 µm.

Therefore, by enabling the thickness of the thermally conductive insulating layer to be within the above ranges, the thermal conductivity performance and the insulating performance of the thermally conductive insulating layer are improved, and the heat dissipation effect of the case is improved.

According to some embodiments of the present application, the case includes a bottom wall and a side wall. The side wall is connected with an edge of the bottom wall. The bottom wall and the side wall form an accommodating cavity with an opening. The thermally conductive insulating layer is provided on at least part of an inner surface of the side wall and the bottom wall. Therefore, the case may be used for accommodating an electrode assembly. After the temperature of the electrode assembly rises in a rapid charging process, the thermally conductive insulating layer may improve the heat dissipation capability of the case on the electrode assembly, reduce the heat accumulation inside the case, and reduce the occurrence risk of thermal runaway of the battery.

According to some embodiments of the present application, the thermally conductive insulating layer is provided on the entire inner surface of the side wall and an entire inner surface of the bottom wall. Therefore, after the temperature of the electrode assembly rises in the rapid charging process, the thermally conductive insulating layer may improve the heat dissipation capability of the case on the electrode assembly, reduce the heat accumulation inside the case, and reduce the occurrence risk of thermal runaway of the battery.

In a second aspect of the present application, a preparation method for a case is provided, which includes: forming a thermally conductive insulating layer on at least part of an inner surface of the case. A thermal conductivity coefficient of the thermally conductive insulating layer ranges from 0.03 W/mK to 10 W/mK, and a resistance of the thermally conductive insulating layer at a high voltage of 1000 V ranges from 100 MΩ to 100 GΩ. Therefore, the prepared case has excellent insulating performance and thermal conductivity performance, and the heat dissipation effect of the case may be improved. When the temperature of the battery rises in the rapid charging process, the heat may be fast dissipated out from the case, the heat dissipation capability of the case is improved, the surface temperature of the battery is lowered, and the occurrence probability of thermal runaway of the battery is reduced.

According to some embodiments of the present application, the method includes: mixing 1 weight part to 50 weight parts of a thermally conductive filler and 50 weight parts to 95 weight parts of a prepolymer with a solvent to obtain slurry, and forming the slurry onto at least part of the inner surface of the case to form the thermally conductive insulating layer. Therefore, the thermal conductivity capability and the insulating performance of the thermally conductive insulating layer are improved, and the electrolyte solution-resistant performance of the thermally conductive insulating layer is improved.

According to some embodiments of the present application, the method further includes: adding at least one of a dispersant and a curing agent into the slurry to form the thermally conductive insulating layer. Therefore, the uniformity and the curing capability of the thermally conductive insulating layer are improved.

According to some embodiments of the present application, the method further includes: cleaning and activating the case before forming the thermally conductive insulating layer. Therefore, the bonding force between the thermally conductive insulating layer and the inner surface of the case is enhanced, and the peeling risk of the thermally conductive insulating layer is reduced.

In a third aspect of the present application, a battery is provided, which includes the case provided in the first aspect of the present application or a case prepared by the method provided in the second aspect of the present application. Therefore, the battery has an excellent heat dissipation effect, and the occurrence risk of thermal runaway of the battery may be reduced.

According to some embodiments of the present application, the case includes a bottom wall and a side wall. The side wall is connected with an edge of the bottom wall. The bottom wall and the side wall form an accommodating cavity with an opening. The battery further includes a positive electrode plate, a negative electrode plate and a separator. The positive electrode plate, the negative electrode plate and the separator are positioned in the accommodating cavity. The positive electrode plate includes a positive electrode current collector. The negative electrode plate includes a negative electrode current collector. The orthographic projection of the separator on the side wall is positioned in a range of the orthographic projection of the negative electrode current collector on the side wall without coincidence, or the orthographic projection of the separator on the side wall is positioned in a range of the orthographic projection of the positive electrode current collector on the side wall without coincidence. The thermally conductive insulating layer is provided on an inner surface of the bottom wall, and the thermally conductive insulating layer is in contact with the negative electrode current collector or the positive electrode current collector. Therefore, the heat dissipation effect of the case is improved, and at the same time, the risk that the negative electrode current collector or the positive electrode current collector is in contact with the case to generate corrosion is reduced.

According to some embodiments of the present application, the orthographic projection of the separator on the side wall is positioned in the range of the orthographic projection of the negative electrode current collector on the side wall without coincidence. Therefore, the risk that the negative electrode current collector is in contact with the case to generate corrosion is reduced.

According to some embodiments of the present application, the negative electrode current collector includes a first region and a second region. The orthographic projection of the first region on the side wall coincides with the orthographic projection of the separator on the side wall. The orthographic projection of the second region on the side wall is positioned in a range of the orthographic projection of the thermally conductive insulating layer on the side wall. Therefore, the risk that the negative electrode current collector is in contact with the case to generate a short circuit is reduced.

According to some embodiments of the present application, in an extension direction of the negative electrode current collector, a length of the second region is D, and meets 1 mm≤D≤5 mm.

According to some embodiments of the present application, one end of the orthographic projection of the thermally conductive insulating layer on the side wall close to the opening of the accommodating cavity coincides with one end of the orthographic projection of the separator on the side wall far away from the opening of the accommodating cavity. Therefore, the risk that the current collector is in lap joint with the case is reduced.

According to some embodiments of the present application, in the extension direction of the negative electrode current collector, a height on the side wall of the thermally conductive insulating layer on the side wall is H, and H≥5 mm. Therefore, the risk that the negative electrode current collector is in contact with the case to generate a short circuit is reduced.

According to some embodiments of the present application, 1 cm≤H≤3 cm. Therefore, the risk that the negative electrode current collector is in contact with the case to generate a short circuit is reduced.

According to some embodiments of the present application, the battery includes: a top cover assembly. The top cover assembly is suitable for being used for sealing the opening of the accommodating cavity. The thermally conductive insulating layer is provided on the entire side wall. One end of the thermally conductive insulating layer close to the top cover assembly is disposed at an interval from one end of the top cover assembly close to the case.

According to some embodiments of the present application, a distance between the end of the thermally conductive insulating layer close to the top cover assembly and the end of the top cover assembly close to the case is L, and 2 mm≤L≤5 mm. Therefore, when a top end of the case is welded, the impact of the thermally conductive insulating layer on the welding is reduced.

In a fourth aspect of the present application, an electric device is provided, which includes the battery provided in the third aspect of the present application. Therefore, the electric device has excellent dissipation capability.

Additional aspects and advantages of the present application will be set forth in part in the description below, parts of which will become apparent from the description below, or will be understood by the practice of the present application.

### BRIEF DESCRIPTION OF THE DRAWINGS

Various other advantages and benefits will become apparent to those of ordinary skill in the art upon reading the following detailed description of the preferred implementations. The accompanying drawings are merely used for illustrating the preferred implementations and are not intended to constitute a limitation on the present application. In addition, in all the accompanying drawings, same parts are indicated by the same reference numerals. In the accompanying drawings:
FIG. 1 is a schematic structural diagram of a case according to an implementation of the present application;
FIG. 2 is a schematic structural diagram of a case according to another implementation of the present application;
FIG. 3 is a schematic diagram of a positive electrode current collector, a negative electrode current collector and a separator according to an implementation of the present application;
FIG. 4 is a schematic structural diagram of a case according to another implementation of the present application;
FIG. 5 is an enlarged view of a local region of FIG. 4;
FIG. 6 is a schematic structural diagram of a case according to another implementation of the present application;
FIG. 7 is a schematic diagram of a battery according to an implementation of the present application;
FIG. 8 is an exploded view of the battery according to an implementation of the present application shown in FIG. 7;
FIG. 9 is a schematic diagram of a battery module according to an implementation of the present application;
FIG. 10 is a schematic diagram of a battery pack according to an implementation of the present application;
FIG. 11 is an exploded view of the battery pack according to an implementation of the present application shown in FIG. 10; and
FIG. 12 is a schematic diagram of an electric device using a battery as a power supply according to an implementation of the present application.

### Reference numerals:

100: case; 101: bottom wall; 102: side wall; 110: cover plate; 120: lower plastic cement; 130: thermally conductive insulating layer; 200: electrode assembly; 210: negative electrode current collector; A: first region; B: second region; 220: positive electrode current collector; 230: separator; 1: battery pack; 2: upper box; 3: lower box; 4: battery module; and 5: battery.

### DETAILED DESCRIPTION

The embodiments of the technical solutions of the present application will be described in detail below. The following embodiments are only used for illustrating the technical solutions of the present application more explicitly, and are thus only interpreted as examples, rather than used for limiting the protection scope of the present application.

"Embodiment" mentioned herein means that particular features, structures, or characteristics described with reference to the embodiment may be included in at least one embodiment of the present application. The term appearing at different positions of the specification may not necessarily refer to the same embodiment or an independent or alternative embodiment that is mutually exclusive with another embodiment. A person skilled in the art explicitly and implicitly understands that the embodiments described herein may be combined with other embodiments.

For brevity, only some numerical ranges are specifically disclosed herein. However, any lower limit may be combined with any upper limit to form a range that is not clearly recorded. Any lower limit may be combined with other lower limit to form a range that is not clearly recorded. Similarly, any upper limit may be combined with any upper limit to form a range that is not clearly recorded. In addition, each separately disclosed point or single numerical value may be used as a lower limit or an upper limit to combine with any other point or other single numerical value or with any other lower limit or upper limit to form a range that is not clearly recorded.

In the description of embodiments of the present application, the term "and/or" only describes an association relationship for describing associated objects and represents that three relationships may exist. For example, A and/or B may represent the following three cases: only A exists, both A and B exist, and only B exists. In addition, the character "/" used herein generally indicates that the former and later associated objects have an "or" relationship.

Unless otherwise defined, meanings of all technical and scientific terms used in the present application are the same as those usually understood by a person skilled in the art to which the present application belongs. Terms used in the specification are merely intended to describe objectives of specific embodiments, but are not intended to limit the present application. In addition, the terms "include", "have", and any variant thereof in the specification, claims, and brief description of the drawings of the present application are intended to cover a non-exclusive inclusion.

At present, from the perspective of development of the market situation, the application of batteries is becoming increasingly wider. Batteries have been not only applied to energy storage power systems of hydropower, thermal power, wind power and solar power stations, but also widely applied to electric traffic tools such as electric bicycles, electric motorcycles, and electric vehicles, as well as to various fields such as military equipment and aerospace. With continuous expansion of application fields of the batteries, market demands of the batteries are also expanding.

The heat generated inside the battery includes reversible chemical heat, irreversible Joule heat and the like caused by entropy change. The Joule heat is in direct proportion with the square of the current. That is, during rapid charging, the heavier the charging current is, the more irreversible heat is generated inside the battery. A heat dissipation path inside the battery is long, so the battery may not realize heat dissipation in time. When the temperature is accumulated to certain degree, a side reaction, such as solid electrolyte membrane (SEI membrane) decomposition may occur inside the battery, but most side reactions occurring inside the battery are exothermic reactions, which may cause further accumulation of the heat, and the risk of thermal runaway of the battery is further increased.

According to the case provided by the present application, a thermally conductive insulating layer is provided on at least part of an inner surface of the case. By enabling the thermal conductivity coefficient and the resistance of the thermally conductive insulating layer to be within certain ranges, the insulating performance and the thermal conductivity performance of the thermally conductive insulating layer may be improved simultaneously, the heat dissipation effect of the case is improved, and the risk of thermal runaway of the battery is reduced.

The case disclosed by embodiments of the present application is applicable to a lithium ion battery and a sodium ion battery, and in addition, the battery disclosed by embodiments of the present application may be used for an electric device using the battery as a power supply or various energy storage systems using the battery as an energy storage component. The electric device may include, but is not limited to a mobile phone, a tablet computer, a laptop, an electric toy, an electric tool, a battery car, an electric vehicle, a ship, a spacecraft, and the like. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

In a first aspect of the present application, a case is provided, which includes a thermally conductive insulating layer. The thermally conductive insulating layer is provided on at least part of an inner surface of the case. A thermal conductivity coefficient of the thermally conductive insulating layer ranges from 0.03 W/mK to 10 W/mK, and a resistance of the thermally conductive insulating layer at a high voltage of 1000 V ranges from 100 MΩ to 100 GΩ.

According to the case provided by the present application, the thermally conductive insulating layer is provided on at least part of the inner surface of the case. By enabling the thermal conductivity coefficient and the resistance of the thermally conductive insulating layer to be within the above ranges, the thermal conductivity performance and the insulating performance of the thermally conductive insulating layer may be improved simultaneously. The occurrence of short circuit inside the case is avoided, and at the same time, the heat transfer rate from the inside of the case to the outside of the case is increased, the heat dissipation effect of the case is improved, the heat accumulation inside the case is reduced, the surface temperature of the battery is lowered, and the occurrence probability of thermal runaway of the battery is reduced.

According to some embodiments of the present application, the thermal conductivity coefficient of the thermally conductive insulating layer ranges from 0.03 W/mK to 10 W/mK, for example, may be 0.03 W/mK, 1 W/mK, 2 W/mK, 3 W/mK, 4 W/mK, 5 W/mK, 6 W/mK, 7 W/mK, 8 W/mK, 9 W/mK, or 10 W/mK, or may be in a range formed by any of the above values. Therefore, the thermal conductivity capability of the thermally conductive insulating layer is improved, so that the heat inside the case may be fast transferred to the outside of the case, the heat dissipation effect of the case is improved, the heat accumulation inside the case is reduced, and the occurrence risk of thermal runaway of the battery is reduced. According to some specific embodiments of the present application, the thermal conductivity coefficient of the thermally conductive insulating layer ranges from 0.2 W/mK to 10 W/mK.

In the present application, a method for testing the thermal conductivity coefficient of the thermally conductive insulating layer is performed according to the GB/T10295-2008 test standard.

According to some embodiments of the present application, the resistance of the thermally conductive insulating layer at the high voltage of 1000 V ranges from 100 MΩ to 100 GΩ, for example, may be 100 MΩ, 500 MΩ, 1 GΩ, 10 GΩ, 20 GΩ, 30 GΩ, 40 GΩ, 50 GΩ, 60 GΩ, 70 GΩ, 80 GΩ, 90 GΩ, or 100 GΩ, or may be in a range formed by any of the above values. Therefore, the insulating performance of the thermally conductive insulating layer is improved, and the occurrence risk of short circuit inside the case is reduced. According to some specific embodiments of the present application, the resistance of the thermally conductive insulating layer at the high voltage of 1000 V may range from 500 MΩ to 50 GΩ.

In the present application, a method for testing the resistance of the thermally conductive insulating layer at the high-voltage condition of 1000 V is as follows: use a dielectric strength tester, where a negative electrode of the dielectric strength tester is connected to one side of the case without the thermally conductive insulating layer, and a positive electrode of the dielectric strength tester is connected to the thermally conductive insulating layer on the case; perform a test according to GB/T 1408.2-2016; and read a resistance value.

According to some embodiments of the present application, a leakage current of the thermally conductive insulating layer may range from 0 mA to 10 mA, for example, may be 0 mA, 1 mA, 2 mA, 3 mA, 4 mA, 5 mA, 6 mA, 7 mA, 8 mA, 9 mA, or 10 mA, or may be in a range formed by any of the above values. Therefore, the thermal conductivity capability and the insulating performance of the thermally conductive insulating layer are improved, and at the same time, the voltage withstanding capability of the thermally conductive insulating layer is improved. According to some specific embodiments of the present application, the leakage current of the thermally conductive insulating layer may range from 0.01 mA to 1 mA.

In the present application, the leakage current of the thermally conductive insulating layer is tested according to GB/T 1408.2-2016.

According to some embodiments of the present application, the thermally conductive insulating layer may include 1 weight part to 50 weight parts of a thermally conductive filler and 50 weight parts to 95 weight parts of a prepolymer. Therefore, by enabling the thermally conductive filler and the prepolymer in the thermally conductive insulating layer to be within the above ranges, the thermal conductivity capability and the insulating performance of the thermally conductive insulating layer are improved.

According to some embodiments of the present application, the thermally conductive insulating layer may include 1 weight part to 50 weight parts of the thermally conductive filler. For example, the content of the thermally conductive filler may be 1 weight part, 5 weight parts, 10 weight parts, 15 weight parts, 20 weight parts, 25 weight parts, 30 weight parts, 35 weight parts, 40 weight parts, 45 weight parts, or 50 weight parts, or may be in a range formed by any of the above values. According to some specific embodiments of the present application, the thermally conductive insulating layer may include 10 weight parts to 30 weight parts of the thermally conductive filler. Therefore, by enabling the content of the thermally conductive filler to be within the above range, the thermal conductivity capability of the thermally conductive insulating layer is improved, and at the same time, the brittleness of the thermally conductive insulating layer is reduced, the mechanical strength and the density of the thermally conductive insulating layer are improved, and the stability of the thermally conductive insulating layer is improved.

According to some embodiments of the present application, the thermally conductive insulating layer may include 50 weight parts to 95 weight parts of the prepolymer. For example, the content of the prepolymer may be 50 weight parts, 55 weight parts, 60 weight parts, 65 weight parts, 70 weight parts, 75 weight parts, 80 weight parts, 85 weight parts, 90 weight parts, or 95 weight parts, or may be in a range formed by any of the above values. According to some specific embodiments of the present application, the thermally conductive insulating layer may include 70 weight parts to 90 weight parts of the prepolymer. Therefore, by enabling the content of the prepolymer to be within the above range, the insulating performance of the thermally conductive insulating layer is improved, and at the same time, the electrolyte solution-resistant performance of the thermally conductive insulating layer is improved, the peeling risk of the thermally conductive insulating layer caused by long-time immersion in the electrolyte solution is reduced, and the impact of the prepolymer on the thermal conductivity capability of the thermally conductive insulating layer is reduced.

According to some embodiments of the present application, the volume average particle size Dᵥ50 of the thermally conductive filler may range from 50 nm to 2000 nm, for example, may be 50 nm, 100 nm, 500 nm, 1000 nm, 1500 nm, or 2000 nm, or may be in a range formed by any of the above values. Therefore, the uniformity of the thermally conductive filler in the thermally conductive insulating layer is improved, the overall thermal conductivity capability of the thermally conductive insulating layer is improved, the heat dissipation effect of the case is improved, the surface temperature of the case is lowered, and the occurrence risk of thermal runaway of the battery is reduced. According to some specific embodiments of the present application, the volume average particle size Dᵥ50 of the thermally conductive filler may range from 100 nm to 1000 nm.

In the present application, the volume average particle size Dᵥ50 refers to the particle size when the accumulated volume distribution percentage reaches 50%. For example, it is tested by using a laser particle size analyzer (Malvern Master Size 2000) with reference to the standard GB/T 19077-2016/ISO 13320:2009. A specific test process includes: take a proper amount of a to-be-tested sample (the sample concentration is guaranteed to have a light shading degree of 8% to 12%), add 20 ml of deionized water, and at the same time, preform ultrasonic treatment for 5 min (53 KHz/120 W) to ensure the complete dispersion of the sample, and then, test the sample according to the standard GB/T19077-2016/ISO 13320:2009.

According to some embodiments of the present application, the thermally conductive filler includes one or more of inorganic particles having a dielectric constant of 5 or above and inorganic particles having ionic conductivity but storing no ions. Therefore, the thermal conductivity performance of the thermally conductive insulating layer is improved, and the heat dissipation effect of the case is improved.

According to some embodiments of the present application, the inorganic particles having a dielectric constant of 5 or above include one or more of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydrate, silicon carbide, boron carbide, aluminum nitride, silicon nitride, boron nitride, magnesium fluoride, calcium fluoride, barium fluoride, barium sulfate, aluminum magnesium silicate, lithium magnesium silicate, sodium magnesium silicate, bentonite, hectorite, zirconium titanate, barium titanate, Pb(Zr,Ti)O₃, Pb₁₋ₘLaₘZr₁₋ₙTiₙO₃, Pb(Mg_{1/3}Nb_{2/3})O₃₋PbTiO₃, and respective modified inorganic particles thereof, 0<m<1, and 0<n<1. Therefore, the thermal conductivity performance of the thermally conductive insulating layer is improved, and the heat dissipation effect of the case is improved.

According to some embodiments of the present application, the inorganic particles having ionic conductivity but storing no ions include one or more of Li₃PO₄, lithium titanium phosphate Liₓ1Ti_{y1}(PO₄)₃, lithium titanium aluminum phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7. Therefore, the thermal conductivity performance of the thermally conductive insulating layer is improved, and the heat dissipation effect of the case is improved.

According to some embodiments of the present application, the weight average molecular weight of the prepolymer may range from 500 to 10000, for example, may be 500, 1000, 2000, 3000, 4000, 5000, 6000, 7000, 8000, 9000, or 10000, or may be in a range formed by any of the above values. Therefore, the brittleness of the polymer is reduced. According to some specific embodiments of the present application, the weight average molecular weight of the prepolymer may range from 1000 to 5000.

According to some embodiments of the present application, the prepolymer may include one or more of polyimide, phenolic resin, urea resin, or epoxy resin. Therefore, through the prepolymer of the above type, the insulating performance of the thermally conductive insulating layer may be improved, and the occurrence risk of short circuit inside the case may be reduced.

According to some embodiments of the present application, the thermally conductive insulating layer may further include a dispersant, and the content of the dispersant may range from 0.1 weight part to 10 weight parts, for example, may be 0.1 weight part, 1 weight part, 2 weight parts, 3 weight parts, 4 weight parts, 5 weight parts, 6 weight parts, 7 weight parts, 8 weight parts, 9 weight parts, or 10 weight parts, or may be in a range formed by any of the above values. Therefore, the uniformity of the thermally conductive filler in the prepolymer is improved, and the occurrence probability of agglomeration of the thermally conductive filler in the prepolymer is reduced. According to some specific embodiments of the present application, the content of the dispersant may range from 0.5 weight part to 5 weight parts.

According to some embodiments of the present application, the dispersant may include one or more of sodium carboxymethyl cellulose, styrene-butadiene rubber, polyvinylpyrrolidone, lauryl sodium sulfate, methyl anyl alcohol, polyacrylamide, or guar gum. Therefore, through the dispersant of the above type, the dispersion uniformity of the thermally conductive filler in the prepolymer may be improved, and the occurrence probability of agglomeration of the thermally conductive filler in the prepolymer may be reduced.

According to some embodiments of the present application, the thermally conductive insulating layer may further include a curing agent, and the content of the curing agent may range from 1 weight part to 20 weight parts, for example, may be 1 weight part, 3 weight parts, 5 weight parts, 7 weight parts, 9 weight parts, 11 weight parts, 13 weight parts, 15 weight parts, 17 weight parts, or 20 weight parts, or may be in a range formed by any of the above values. Therefore, the curing efficiency of the thermally conductive insulating layer on the case is improved. According to some specific embodiments of the present application, the content of the curing agent may range from 5 weight parts to 10 weight parts.

According to some embodiments of the present application, the curing agent may include one or more of hexamethylenetetramine, ethidene diamine, hexamethylenediamine, diethylenetriamine, triethylene tetramine, p-phenylenediamine, m-phenylenediamine, terephthalic acid, phenylenediacetic acid, maleic anhydride, or phthalic anhydride. Therefore, by adding the curing agent of the above type into the thermally conductive insulating layer, the curing efficiency of the thermally conductive insulating layer may be improved.

According to some specific embodiments of the present application, the thermally conductive insulating layer includes 1 weight part to 50 weight parts of the thermally conductive filler, 50 weight parts to 95 weight parts of the prepolymer, 0.1 weight part to 10 weight parts of the dispersant, and 1 weight part to 20 weight parts of the curving agent. Therefore, the thermal conductivity capability and the insulating performance of the thermally conductive insulating layer are improved, and at the same time, the agglomeration probability of the thermally conductive filler in the prepolymer is reduced, and the curing efficiency of the thermally conductive insulating layer is improved.

According to some specific embodiments of the present application, a thickness of the thermally conductive insulating layer may range from 1 µm to 1000 µm, for example, may be 1 µm, 10 µm, 100 µm, 200 µm, 300 µm, 400 µm, 500 µm, 600 µm, 700 µm, 800 µm, 900 µm, or 1000 µm, or may be in a range formed by any of the above values. Therefore, the thermal conductivity capability and the insulating performance of the thermally conductive insulating layer are improved, a space of the case occupied by the thermally conductive insulating layer is reduced, and the energy density of the battery is improved. According to some specific embodiments of the present application, the thickness of the thermally conductive insulating layer may range from 20 µm to 200 µm.

In the present application, the thickness of the thermally conductive insulating layer is tested according to the ISO2360 standard.

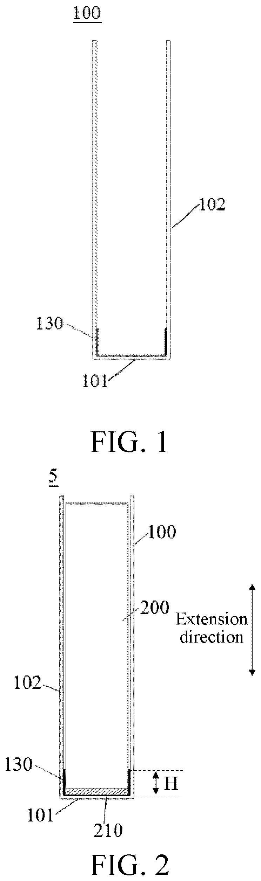

According to some embodiments of the present application, referring to FIG. 1, the case 100 may further include a bottom wall 101 and a side wall 102. The side wall 102 is connected with an edge of the bottom wall 101. The bottom wall 101 and the side wall 102 form an accommodating cavity with an opening. The thermally conductive insulating layer 130 is provided on at least part of an inner surface of the side wall 102 and the bottom wall 101. Therefore, the heat dissipation effect of the case 100 is improved, the surface temperature of the case 100 is lowered, and the occurrence risk of thermal runaway of the battery is reduced.

According to some embodiments of the present application, the thermally conductive insulating layer is provided on the entire inner surface of the side wall and an entire inner surface of the bottom wall. Therefore, when the temperature of the battery rises, the heat may be fast dissipated out from the case 100. The heat dissipation capability of the case 100 is improved, the surface temperature of the battery is lowered, and the occurrence probability of thermal runaway of the battery is reduced.

In a second aspect of the present application, a preparation method for a case is provided, which includes: form a thermally conductive insulating layer on at least part of an inner surface of the case. A thermal conductivity coefficient of the thermally conductive insulating layer ranges from 0.03 W/mK to 10 W/mK, and a resistance of the thermally conductive insulating layer at a high voltage of 1000 V ranges from 100 MΩ to 100 GΩ. Therefore, the prepared case 100 has excellent insulating performance and thermal conductivity performance, and the heat dissipation effect of the case 100 may be improved. When the temperature of the battery rises in a rapid charging process, the heat may be fast dissipated out from the case 100, the heat dissipation capability of the case 100 is improved, the surface temperature of the battery is lowered, and the occurrence probability of thermal runaway of the battery is reduced.

According to some embodiments of the present application, the thermally conductive insulating layer may be formed through single-layer coating or multilayer coating.

According to some embodiments of the present application, the thermally conductive insulating layer may be formed through one or more of spray coating, dip coating, shower coating, or scraping coating.

According to some embodiments of the present application, the method includes: mix 1 weight part to 50 weight parts of a thermally conductive filler and 50 weight parts to 95 weight parts of a prepolymer with a solvent to obtain slurry, and form the slurry onto the case to form the thermally conductive insulating layer. Therefore, the insulating performance and the thermal conductivity performance of the thermally conductive insulating layer are improved, and the heat dissipation effect of the case is improved.

According to some embodiments of the present application, the content of the solvent in the slurry may range from 30 weight parts to 90 weight parts, for example, may be 30 weight parts, 40 weight parts, 50 weight parts, 60 weight parts, 70 weight parts, 80 weight parts, or 90 weight parts, or may be in a range formed by any of the above values. Therefore, the uniformity of the slurry is improved, the overall thermal conductivity capability and insulating performance of the thermally conductive insulating layer are improved, the electrolyte solution-resistant performance of the thermally conductive insulating layer is improved, the peeling probability of the thermally conductive insulating layer is reduced, the occurrence risk of thermal runaway of the battery is reduced, and the service life of the battery is prolonged.

According to some embodiments of the present application, the method further includes: add at least one of a dispersant and a curing agent into the slurry to form the thermally conductive insulating layer. Therefore, the uniformity and the curing capability of the thermally conductive insulating layer are improved.

According to some embodiments of the present application, the method includes: mix 1 weight part to 50 weight parts of a thermally conductive filler, 50 weight parts to 95 weight parts of a prepolymer, 0.1 weight part to 10 weight parts of a dispersant, and 5 weight parts to 10 weight parts of a curing agent with a solvent to obtain slurry, and form the slurry onto the case to form the thermally conductive insulating layer. Therefore, the insulating performance and the thermal conductivity performance of the thermally conductive insulating layer are improved, and the heat dissipation effect of the case is improved.

According to some embodiments of the present application, the solvent may include one or more of water, methanol, ethanol, n-butyl alcohol, acetone, and N-methylpyrrolidone.

According to some embodiments of the present application, the slurry may form the thermally conductive insulating layer through thermo-curing, and a thermo-curing temperature may range from 100°C to 200°C, for example, may be 100°C, 120°C, 140°C, 160°C, 180°C, or 200°C, or may be in a range formed by any of the above values.

According to some embodiments of the present application, the method further includes: clean and activate the case before forming the thermally conductive insulating layer. Specifically, oil stain and impurities on the surface of the case may be removed through one or more of plasma surface cleaning, acid cleaning, or alkali cleaning, so that the surface of the case is rich of active groups such as -OH and -COOH. These active groups take reaction with active groups such as -OH, -COOH, -NH₂, and -C₂H₄O in the slurry of the thermally conductive insulating layer, and the thermally conductive insulating layer is bonded onto the surface of the case through covalent bonds, so that the bonding force between the thermally conductive insulating layer and the case is enhanced, and the peeling risk of the thermally conductive insulating layer caused by high temperature or long-time immersion in an electrolyte solution is reduced.

In a third aspect of the present application, a battery is provided, which includes the case provided in the first aspect of the present application or a case prepared by the method provided in the second aspect of the present application. Therefore, the heat dissipation effect of the case of the battery may be improved, the surface temperature of the battery may be lowered, and the occurrence risk of thermal runaway of the battery may be reduced.

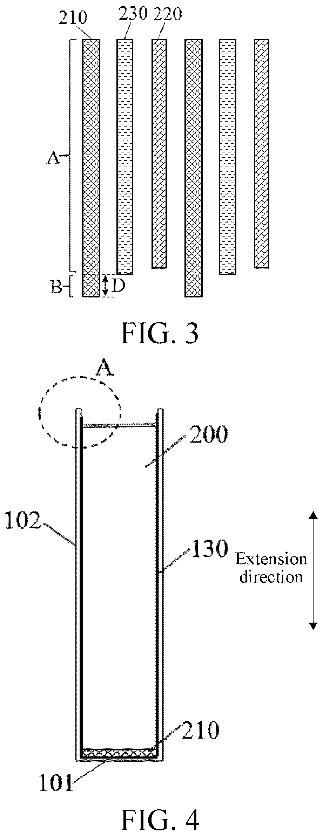

According to some embodiments of the present application, referring to FIG. 2 and FIG. 3, the case 100 includes a bottom wall 101 and a side wall 102. The side wall 102 is connected with an edge of the bottom wall 101. The bottom wall 101 and the side wall 102 form an accommodating cavity with an opening. The battery 5 further includes a positive electrode plate, a negative electrode plate and a separator 230. The positive electrode plate, the negative electrode plate and the separator 230 are positioned in the accommodating cavity. The positive electrode plate includes a positive electrode current collector 220. The negative electrode plate includes a negative electrode current collector 210. The orthographic projection of the separator 230 on the side wall 102 is positioned in a range of the orthographic projection of the negative electrode current collector 210 on the side wall 102 without coincidence, or the orthographic projection of the separator 230 on the side wall 102 is positioned in a range of the orthographic projection of the positive electrode current collector 220 on the side wall 102 without coincidence. The thermally conductive insulating layer 130 is provided on an inner surface of the bottom wall 101. The thermally conductive insulating layer 130 is in contact with the negative electrode current collector 210 or the positive electrode current collector 220. Specifically, an outer surface of an electrode assembly 200 is provided with an insulating film (not shown in the figures), so that the electrode assembly 200 is insulated from the case 100. The thermally conductive insulating layer 130 is provided between the negative electrode current collector 210 and the bottom wall 101 of the case 100, as well as between the negative electrode current collector and the side wall 102 of the case 100. Heat generated inside the battery 5 may be directly dissipated to the outside of the battery 5 through the negative electrode current collector 210, the thermally conductive insulating layer 130, and the bottom wall 101 of the case. The heat dissipation effect of the case 100 is improved, and at the same time, the corrosion risk when the negative electrode current collector 210 is in contact with the bottom wall 101 of the case 100 is reduced. Alternatively, the thermally conductive insulating layer 130 is provided between the positive electrode current collector 220 and the bottom wall 101 of the case 100, as well as between the positive electrode current collector and the side wall 102 of the case 100. Therefore, the heat generated inside the battery 5 may be directly dissipated to the outside of the battery 5 through the positive electrode current collector 220, the thermally conductive insulating layer 130 and the bottom wall 101 of the case, and the heat dissipation effect of the case 100 is improved.

According to some embodiments of the present application, the orthographic projection of the separator 230 on the side wall is positioned in the range of the orthographic projection of the negative electrode current collector 210 on the side wall without coincidence.

According to some embodiments of the present application, referring to FIG. 4, when the thermally conductive insulating layer 130 is provided on the inner surface of the side wall 102 of the case 100, the electrode assembly 200 may be insulated from the case 100 through the thermally conductive insulating layer 130. The arrangement of an insulating film on the outer surface of the electrode assembly 200 is not needed, the space occupied by the electrode assembly 200 is reduced, and the energy density of the battery 5 is improved.

According to some embodiments of the present application, referring to FIG. 3, the negative electrode current collector 210 includes a first region A and a second region B. The orthographic projection of the first region A on the side wall 102 coincides with the orthographic projection of the separator on the side wall 102. The orthographic projection of the second region B on the side wall 102 is positioned in a range of the orthographic projection of the thermally conductive insulating layer 130 on the side wall 102. Specifically, a size of the first region A of the negative electrode current collector 210 may be the same as that of the separator. The second region B of the negative electrode current collector 210 extends towards the bottom wall 101 of the case 100, and the thermally conductive insulating layer 130 is formed between the second region B and the bottom wall 101 of the case 100. Therefore, the heat generated inside the battery 5 may be directly dissipated to the outside of the battery 5 through the negative electrode current collector 210, the thermally conductive insulating layer 130 and the bottom wall 101 of the case. The heat dissipation effect of the case 100 is improved, and at the same time, the corrosion risk when the negative electrode current collector 210 is in contact with the bottom wall 101 of the case 100 is reduced.

According to some embodiments of the present application, referring to FIG. 3, in an extension direction of the negative electrode current collector 210, a length of the second region B is D, meets 1 mm≤D≤5 mm, for example, may be 1 mm, 2 mm, 3 mm, 4 mm, or 5 mm, or may be in a range formed by any of the above values.

According to some embodiments of the present application, one end of the orthographic projection of the thermally conductive insulating layer 130 on the side wall 102 close to the opening of the accommodating cavity coincides with one end of the orthographic projection of the separator 230 on the side wall far away from the opening of the accommodating cavity. Therefore, the risk that the current collector is in lap joint with the case is reduced.

According to some embodiments of the present application, referring to FIG. 2, along the extension direction of the negative electrode current collector 210, a height of the thermally conductive insulating layer 130 on the side wall 102 is H, H≥5 mm, for example, may be 5 mm, 10 mm, 15 mm, 20 mm, 25 mm, 30 mm, 35 mm, or 40 mm, or may be in a range formed by any of the above values. Therefore, the heat dissipation effect is improved, and at the same time, the content of an active material on the negative electrode plate is increased, and the energy density of the battery 5 is improved. According to some specific embodiments of the present application, 1 cm≤H≤3 cm.

According to some embodiments of the present application, the battery includes: a top cover assembly. The top cover assembly is suitable for being used for sealing the opening of the accommodating cavity. The thermally conductive insulating layer 130 is provided on the entire side wall 102. One end of the thermally conductive insulating layer 130 close to the top cover assembly is disposed at an interval from one end of the top cover assembly close to the case 100. Therefore, when the case 100 is welded to the top cover assembly, the impact of the thermally conductive insulating layer 130 on the welding is reduced.

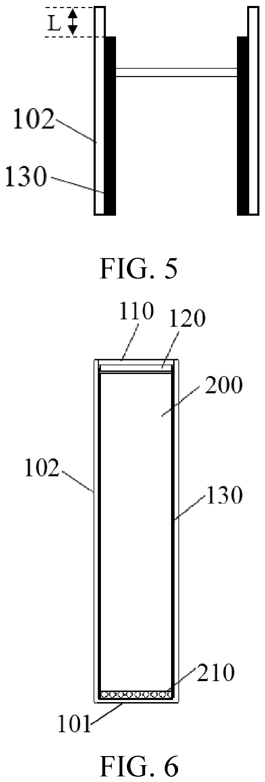

According to some embodiments of the present application, referring to FIG. 4 to FIG. 6, a distance between the end of the thermally conductive insulating layer 130 close to the top cover assembly and the end of the top cover assembly close to the case 100 is L, 2 mm≤L≤5 mm, for example, may be 2.5 mm, 3 mm, 3.5 mm, 4 mm, 4.5 mm, or 5 mm, or may be in a range formed by any of the above values. Specifically, when a top end of the case 100 is provided with a lower plastic cement 120 and a cover plate 110, by enabling the L to be within the above range, when the case 100 is welded to the top cover assembly, the impact of the thermally conductive insulating layer 130 on the welding is reduced.

### [Positive electrode plate]

A positive electrode plate includes a positive electrode current collector and a positive electrode active material layer disposed on at least one surface of the positive electrode current collector.

As an example, the positive electrode current collector has two opposite surfaces in its own thickness direction, and the positive electrode active material layer is disposed on either or both of the two opposite surfaces of the positive electrode current collector.

In some implementations, the positive electrode current collector may use a metal foil or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, and the like) on the polymer material substrate (for example, a substrate of polypropylene (PP), polyethylene terephthalate (PET), polybutylene terephthalate (PBT), polystyrene (PS), polyethylene (PE), and the like).

In some implementations, when the battery is a lithium ion battery, the positive electrode active material may use a positive electrode active material used for the lithium ion battery well known in the art. As an example, the positive electrode active material may include one or more of the following materials: a lithium-containing phosphate of an olivine structure, a lithium transition metal oxide, and respective modified compounds thereof. However, the present application is not limited to such materials, and other conventional materials capable of being used as a positive electrode active material for batteries may also be used. Only one or a combination of two or more of these positive electrode active materials may be used. Examples of the lithium transition metal oxide may include but are not limited to one or more of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (may also be referred to as NCM₃₃₃ for short), LiNi_{0.5}Co_{0.2}Mn_{0.3}O₂ (may also be referred to as NCM₅₂₃ for short), LiNi_{0.5}Co_{0.25}Mn_{0.25}O₂ (may also be referred to as NCM₂₁₁ for short), LiNi_{0.6}Co_{0.2}Mn_{0.2}O₂ (may also be referred to as NCM₆₂₂ for short), LiNi_{0.8}Co_{0.1}Mn_{0.1}O₂ (may also be referred to as NCM₈₁₁ for short), a lithium nickel cobalt aluminum oxide (for example, LiNi_{0.8}Co_{0.15}Al_{0.05}O₂) and modified compounds thereof. Examples of the lithium-containing phosphate of the olivine structure may include but are not limited to one or more of lithium iron phosphate (for example, LiFePO₄ (may also be referred to as LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

For example, when the battery is a sodium ion battery, as an example, the positive electrode active material may include but is not limited to at least one of a layered transition metal oxide, a polyanionic compound, and a Prussian blue analogue.

As an example of the layered transition metal oxide, the following may be listed:
Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, and Ba, 0<x≤0.33, 0<h≤0.24, 0≤k≤0.32, 0<l≤0.68, 0≤m<0.1, h+k+l+m=1, and 0≤y<0.2;
Na_{0.67}Mn_{0.7}Ni_{z}M²_{0.3-z}O₂, where M²·is one or more of Li, Mg, Al, Ca, Ti, Fe, Cu, Zn, and Ba, and 0<z≤0.1; and
NaₐLi_{b}Ni_{c}Mn_{d}FeₑO₂, where 0.67<a≤1, 0<b<0.2, 0<c<0.3, 0.67<d+e<0.8, and b+c+d+e=1.

As an example of the above polyanionic compound, for example, the following may be listed:
A¹_{f}M³_{g}(PO₄)ᵢOⱼX¹₃₋ⱼ, where A¹ is one or more of H, Li, Na, K, and NH₄, M³ is one or more of Ti, Cr, Mn, Fe, Co, Ni, V, Cu, and Zn, X¹ is one or more of F, Cl, and Br, 0<f≤4, 0<g≤2, 1≤i≤3, and 0≤j≤2;
NaₙM⁴PO₄X², where M⁴ is one or more of Mn, Fe, Co, Ni, Cu, and Zn, X² is one or more of F, Cl, and Br, and 0<n≤2;
NaₚM⁵_{q}(SO₄)₃, where M⁵ is one or more of Mn, Fe, Co, Ni, Cu, and Zn, 0 < p ≤ 2, and 0<q≤2; and
NaₛMnₜFe₃₋ₜ(PO₄)₂(P₂O₇), where 0<s≤4, 0≤t≤3, and for example, t is 0, 1, 1.5, 2, or 3.

As an example of the Prussian blue analogue, for example, the following may be listed:
AᵤM⁶ᵥ[M⁷(CN)₆]_{w}·xH₂O, where A is one or more of H⁺, NH₄⁺, an alkali metal cation, and an alkaline earth metal cation, M⁶ and M⁷ are respectively and independently one or more of transition metal cations, 0<u≤2, 0<v≤1, 0<w≤1, and 0<x<6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺, and M6 and M7 are respectively and independently one or more transition metal cations of Ti, V, Cr, Mn, Fe, Co, Ni, Cu, Zn, Sn, and W.

The modified compound of each of the above materials may be obtained by performing doping modification and/or surface coating modification on the material.

In some implementations, the positive electrode active material layer further optionally includes a binder. As an example, the binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin.

In some implementations, the positive electrode active material layer further optionally includes a conductive agent. As an example, the conductive agent may include one or more of superconducting carbon, acetylene black, carbon black, Ketjen black, carbon dots, carbon nanotubes, graphene, and carbon nanofibers.

In some implementations, the positive electrode plate may be prepared by the following method: disperse the above components for preparing the positive electrode plate, for example, the positive electrode active material, the conductive agent, the binder, and any other components in a solvent (for example, N-methylpyrrolidone) to form positive electrode slurry; and coat the positive electrode current collector with the positive electrode slurry, perform working procedures such as drying and cold pressing, and then obtain the positive electrode plate.

### [Negative electrode plate]

A negative electrode plate includes a negative electrode current collector and a negative electrode active material layer disposed on at least one surface of the negative electrode current collector. The negative electrode active material layer includes a negative electrode active material.

As an example, the negative electrode current collector has two opposite surfaces in its own thickness direction, and the negative electrode active material layer is disposed on either or both of the two opposite surfaces of the negative electrode current collector.

In some implementations, the negative electrode current collector may use a metal foil or a composite current collector. For example, a copper foil may be used as the metal foil. The composite current collector may include a polymer material substrate layer and a metal layer formed on at least one surface of a polymer material substrate. The composite current collector may be formed by forming a metal material (copper, copper alloy, nickel, nickel alloy, titanium, titanium alloy, silver, silver alloy, and the like) on the polymer material substrate (for example, a substrate of polypropylene (PP), polyethylene terephthalate (PET), polybutylene terephthalate (PBT), polystyrene (PS), polyethylene (PE), and the like).

In some implementations, the negative electrode active material may use a negative electrode active material used for batteries well known in the art. As an example, the negative electrode active material may include one or more of the following materials: artificial graphite, natural graphite, soft carbon, hard carbon, a silicon-based material, a tin-based material, lithium titanate, and the like. The silicon-based material may be one or more selected from monatomic silicon, a silicon oxide compound, a silicon-carbon composite, a silicon-nitrogen composite, and silicon alloy. The tin-based material may be one or more selected from monatomic tin, a tin oxide compound, and tin alloy. However, the present application is not limited to such materials, and other conventional materials capable of being used as a negative electrode active material for batteries may also be used. Only one or a combination of two or more of these negative electrode active materials may be used.

In some implementations, the negative electrode active material layer further optionally includes a binder. The binder may be one or more selected from styrene-butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA), and carboxymethyl chitosan (CMCS).

In some implementations, the negative electrode active material layer further optionally includes a conductive agent. The conductive agent may be one or more selected from superconducting carbon, acetylene black, carbon black, Ketjen black, carbon dots, carbon nanotubes, graphene, and carbon nanofibers.

In some implementations, the negative electrode active material layer further optionally includes another adjuvant, such as a thickener (for example, sodium carboxymethyl cellulose (CMC-Na)).

In some implementations, the negative electrode plate may be prepared by the following method: disperse the above components for preparing the negative electrode plate, for example, the negative electrode active material, the conductive agent, the binder, and any other components in a solvent (for example, deionized water) to form negative electrode slurry; and coat the negative electrode current collector with the negative electrode slurry, perform working procedures such as drying and cold pressing, and then obtain the negative electrode plate.

### [Electrolyte]

An electrolyte achieves an ion conducting effect between the positive electrode plate and the negative electrode plate. A type of the electrolyte is not specifically limited in the present application, and it may be selected according to demands.

In some implementations, the electrolyte uses an electrolyte solution. The electrolyte solution includes an electrolyte salt and a solvent.

In some implementations, the electrolyte salt may be one or more selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalato)borate, lithium difluorobis(oxalato)phosphate, and lithium tetrafluoro(oxalato)phosphate.

In some implementations, the solvent may be one or more selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution further optionally includes an additive. For example, the additive may include a negative electrode film-forming additive and a positive electrode film-forming additive, and may further include an additive capable of improving some properties of the battery, for example, an additive capable of improving the overcharging property of the battery, an additive capable of improving the high-temperature or low-temperature property of the battery, and the like.

### [Separator]

In some implementations, the battery further includes a separator. The type of the separator is not particularly limited in the present application, and any well-known separator of a porous structure having good chemical stability and mechanical stability may be selected and used.

In some implementations, a material of the separator may be one or more selected from glass fiber, non-woven fabric, polyethylene, polypropylene, and polyvinylidene fluoride. The separator may be a single-layer film or a multilayer composite film without particular limitation. In a case that the separator is a multilayer composite film, materials of each layer may be the same or different without particular limitation.

In some implementations, the positive electrode plate, the negative electrode plate, and the separator may be made into an electrode assembly by a winding process or a laminating process.

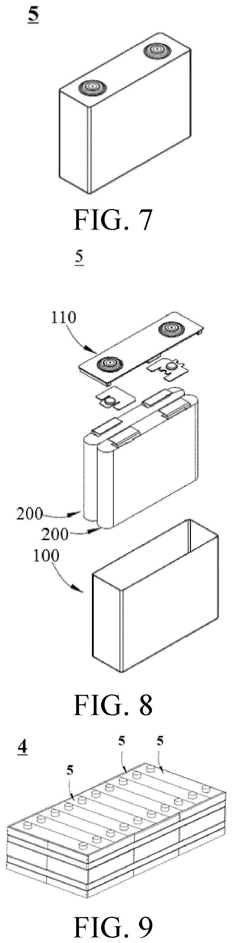

A shape of the battery is not particularly limited in the present application, and the battery may be in a cylindrical shape, a square shape, or any other shape. For example, FIG. 7 shows a battery 5 of a square structure as an example.

In some implementations, referring to FIG. 8, an outer packaging may include a case 100 and a cover plate 110. The positive electrode plate, the negative electrode plate, and the separator may be made to form the electrode assembly 200 by a winding process or a laminating process. The electrode assembly 200 is encapsulated in the accommodating cavity. An electrolyte solution infiltrates into the electrode assembly 200. The quantity of the electrode assembly 200 included in the battery 5 may be one or more, and it may be selected by those skilled in the art according to specific practical demands.

In some implementations, the battery may be assembled into a battery module. The quantity of the battery included by the battery module may be one or more, and the specific quantity may be selected by those skilled in the art according to the application and capacity of the battery module.

FIG. 9 shows a battery module 4 as an example. Referring to FIG. 9, in the battery module 4, a plurality of batteries 5 may be sequentially arranged in a length direction of the battery module 4. Of course, the batteries may also be arranged in any other manners. The plurality of batteries 5 may further be fixed through a fastener.

Optionally, the battery module 4 may further include a shell with an accommodating space, and the plurality of batteries 5 are accumulated in the accommodating space.

In some implementations, the battery module may further be assembled into a battery pack, the quantity of battery module included in the battery pack may be one or more, and the specific quantity may be selected by those skilled in the art according to the application and capacity of the battery pack.

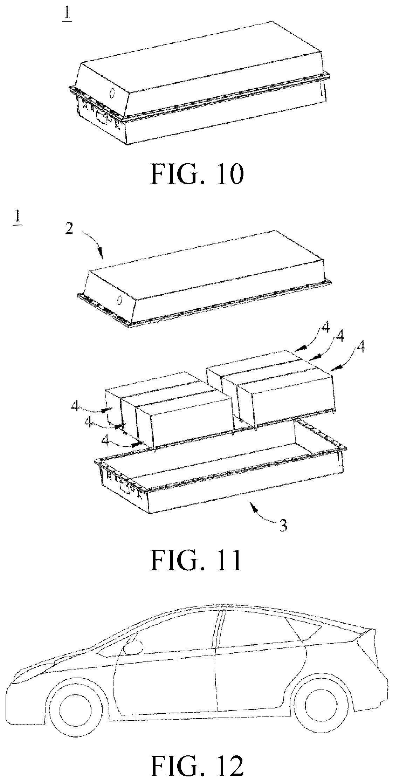

FIG. 10 and FIG. 11 show a battery pack 1 as an example. Referring to FIG. 10 and FIG. 11, the battery pack 1 may include a battery box and a plurality of battery modules 4 disposed in the battery box. The battery box includes an upper box 2 and a lower box 3. The upper box 2 may cover the lower box 3 to form a closed space for accommodating the battery modules 4. The plurality of battery modules 4 may be arranged in the battery box in any manner.

In a fourth aspect of the present application, an electric device is provided. The electric device includes the battery provided in the third aspect of the present application. The electric device may include but is not limited to a mobile device (for example, a mobile phone or a laptop), an electric vehicle (for example, an all-electric vehicle, a hybrid electric vehicle, a plug-in hybrid electric vehicle, an electric bicycle, an electric scooter, an electric golf cart, an electric truck, and the like), an electric train, a ship, a satellite, an energy storage system, and the like.

FIG. 12 shows an electric device as an example. The electric device is an all-electric vehicle, a hybrid electric vehicle, or a plug-in hybrid electric vehicle, and the like. To meet the requirements of the electric device on high power and high energy density of the battery, the battery pack or the battery module may be used.

The device as another example may be a mobile phone, a tablet computer, a laptop, and the like. The device generally requires light weight and thin appearance, and the battery may be used as a power supply.

To make the technical problems to be solved, the technical solutions and beneficial effects of the embodiments of the present application more apparent, further detailed description will be given with reference to embodiments and accompanying drawings hereafter. It is clear that the described embodiments are a part of the embodiments of the present application, rather than all of the embodiments. The following descriptions on at least one exemplary embodiment are actually merely illustrative, and are not intended to limit the present application and the application thereof. All other embodiments obtained by those of ordinary skill in the art based on the embodiments of the present application without creative efforts shall fall within the protection scope of the present application.

### Embodiment 1

### 1. Preparation of positive electrode plate

A positive electrode active material LiFePO4, a conductive agent carbon black (Super P), and a binder polyvinylidene fluoride (PVDF) were sufficiently stirred and mixed in a proper amount of solvent N-methylpyrrolidone (NMP) according to a mass ratio of 80:15:5 to form uniform positive electrode slurry; and the positive electrode slurry was uniformly coated onto a surface of a positive electrode current collector aluminum foil, drying and cold pressing were performed, and then, a positive electrode plate was obtained.

### 2. Preparation of negative electrode plate

Hard carbon of a type of Kuraray Type1 was used as a negative electrode active material, the hard carbon negative electrode active material, a conductive agent carbon black (Super P), and a binder carboxymethyl cellulose (CMC) were sufficiently stirred and mixed in a proper amount of solvent ionized water according to a mass ratio of 90:5:5 to form uniform negative electrode slurry; and the negative electrode slurry was uniformly coated onto a surface of a negative electrode current collector aluminum foil, drying and cold pressing were performed, and then, a negative electrode plate was obtained.

### 3. Preparation of electrolyte solution

Ethylene carbonate (EC) and diethyl carbonate (DEC) having the same volumes were mixed to obtain an organic solvent, and then, NaPF₆ was dissolved into the original solvent to prepare an electrolyte solution with a concentration of 1 mol/L.

### 4. Separator

A porous polyethylene film was used as a separator.

### 5. Preparation of electrode assembly

The positive electrode plate, the separator, and the negative electrode plate were sequentially winded, the separator was enabled to be between the positive electrode plate and the negative electrode plate to achieve a separation effect, and an electrode assembly was obtained.

### 6. Preparation of case

A thermally conductive filler, a prepolymer, a curing agent, and a dispersant were sufficiently stirred and mixed in a proper amount of solvent according to a mass ratio of 2: 89: 2: 7 to form uniform slurry, the slurry was coated to a bottom and a side wall of a case, a height H of a coating layer on the side wall was 5 mm, heating and curing were performed, and then, a case with a thermally conductive insulating layer attached to an inner wall was obtained.

### 7. Assembly of electrode assembly and case

Preparation methods of batteries and cases in Embodiment 2 to Embodiment 25 and Comparative example 1 to Comparative example 4 were the same as that in Embodiment 1. The details of differences are as shown in Table 1.

**Table 1**

| | **Thermally conductive insulating layer** | | | | | | | | | | | | | | |
|---|---|---|---|---|---|---|---|---|---|---|---|---|---|---|---|
| | **Thermally conductive filler** | | | **Prepolymer** | | | **Dispersant** | | **Curing agent** | | | | | | **H/m m** |
| | **Type** | **Content/weight part** | **Volume average particle size Dᵥ50/n m** | **Type** | **Content/weig ht part** | **Weight average molecular weight** | **Type** | **Content/weight part** | **Type** | **Content/weight part** | **Thickness/µm** | **Thermal conductivity coefficient/W/m K** | **Resistance/ Ω** | **Leakage current/m A** | |
| **Comparati ve Example 1** | / | 0 | / | Phenolic resin prepolymer | 91 | 2000 | CMC-Na | 2 | p-phenylenediami ne | 7 | 80 | 0.02 | 22G | 0.001 | 0 |
| **Embodiment 1** | Boehmite | 2 | 500 | Phenolic resin prepolymer | 89 | 2000 | CMC-Na | 2 | p-phenylenediami ne | 7 | 80 | 0.03 | 20.5G | 0.001 | 5 |
| **Embodiment 2** | Boehmite | 5 | 500 | Phenolic resin prepolymer | 86 | 2000 | CMC-Na | 2 | p-phenylenediami ne | 7 | 80 | 0.22 | 12.2G | 0.006 | 5 |
| **Embodime nt 3** | Boehmite | 20 | 500 | Phenolic resin prepolymer | 71 | 2000 | CMC-Na | 2 | p-phenylenediami ne | 7 | 80 | 2.01 | 8.6G | 0.01 | 5 |
| **Embodime nt 4** | Boehmite | 30 | 500 | Phenolic resin prepolymer | 61 | 2000 | CMC-Na | 2 | p-phenylenediami ne | 7 | 80 | 4.95 | 5.1G | 0.02 | 5 |
| **Embodime nt 5** | Boehmite | 50 | 500 | Phenolic resin prepolymer | 48 | 2000 | CMC-Na | 2 | / | 0 | 80 | 9.53 | 510M | 1.1 | 5 |
| **Comparati ve Example 2** | Boehmite | 75 | 500 | Phenolic resin prepolymer | 16 | 2000 | CMC-Na | 2 | p-phenylenediami ne | 7 | 80 | 13 | 200M | 5 | 5 |
| **Comparati ve Example 3** | Boehmite | 50 | 500 | Phenolic resin prepolymer | 41 | 2000 | CMC-Na | 2 | p-phenylenediami ne | 7 | 5 | 9.2 | 90M | 10.1 | 5 |
| **Embodime nt 6** | Boehmite | 20 | 500 | Phenolic resin prepolymer | 40 | 2000 | CMC-Na | 2 | p-phenylenediami ne | 38 | 10 | 1.92 | 100M | 4.8 | 5 |
| **Embodime nt 7** | Boehmite | 20 | 500 | Phenolic resin prepolymer | 50 | 2000 | CMC-Na | 2 | p-phenylenediami ne | 28 | 20 | 1.87 | 507M | 0.08 | 5 |
| **Embodime nt 8** | Boehmite | 20 | 500 | Phenolic resin prepolymer | 60 | 2000 | CMC-Na | 2 | p-phenylenediami ne | 18 | 20 | 1.84 | 4.8G | 0.028 | 5 |
| **Embodime nt 9** | Boehmite | 20 | 500 | Phenolic resin prepolymer | 70 | 2000 | CMC-Na | 2 | p-phenylenediami ne | 8 | 20 | 1.81 | 7.6G | 0.008 | 5 |
| **Embodime nt 10** | Boehmite | 20 | 500 | Phenolic resin prepolymer | 78 | 2000 | CMC-Na | 2 | / | 0 | 100 | 1.78 | 49.9G | 0.002 | 5 |
| **Embodime nt 11** | / | 0 | / | Phenolic resin prepolymer | 90 | 2000 | CMC-Na | 2 | p-phenylenediami ne | 8 | 100 | 0.03 | 100G | 0.001 | 5 |
| **Comparati ve Example 4** | / | 0 | / | Phenolic resin prepolym er | 95 | 2000 | CMC-Na | 2 | p-phenylenediami ne | 3 | 100 | 0.02 | 110G | 0 | 5 |
| **Embodime nt 12** | Boehmite | 20 | 500 | Phenolic resin prepolym er | 50 | 2000 | CMC-Na | 2 | p-phenylenediami ne | 28 | 120 | 1.80 | 865M | 0.01 | 5 |
| **Embodime nt 13** | Boehmite | 20 | 500 | Phenolic resin prepolym er | 50 | 2000 | CMC-Na | 2 | p-phenylenediami ne | 28 | 15 | 1.83 | 478M | 1 | 5 |
| **Embodime nt 14** | Boehmite | 20 | 500 | Phenolic resin prepolym er | 50 | 2000 | CMC-Na | 2 | p-phenylenediami ne | 28 | 8 | 1.82 | 432M | 5 | 5 |
| **Embodime nt 15** | Boehmite | 20 | 500 | Phenolic resin prepolym er | 50 | 2000 | CMC-Na | 2 | p-phenylenediami ne | 28 | 6 | 1.87 | 316M | 9.8 | 5 |
| **Embodime nt 16** | Boehmite | 1 | 500 | Phenolic resin prepolym er | 90 | 2000 | CMC-Na | 2 | p-phenylenediami ne | 7 | 80 | 0.03 | 8.2G | 0.005 | 5 |
| **Embodime nt 17** | Boehmite | 10 | 500 | Phenolic resin prepolym er | 81 | 2000 | CMC-Na | 2 | p-phenylenediami ne | 7 | 80 | 0.59 | 8.1G | 0.006 | 5 |
| **Embodime nt 18** | Boehmite | 60 | 500 | Phenolic resin prepolym er | 31 | 2000 | CMC-Na | 2 | p-phenylenediami ne | 7 | 80 | 9.6 | 386M | 2.3 | 5 |
| **Embodime nt 19** | Boehmite | 20 | 500 | Polyimide | 70 | 2000 | CMC-Na | 2 | p-phenylenediami ne | 7 | 80 | 1.82 | 7.5G | 0.02 | 5 |
| **Embodime nt 20** | Aluminu m oxide | 20 | 500 | Phenolic resin prepolym er | 71 | 2000 | Styrene-butadien e rubber | 2 | Terephthalic acid | 7 | 1 | 1.88 | 1G | 1.1 | 5 |
| **Embodime nt 21** | Aluminu m oxide | 20 | 500 | Phenolic resin prepolym er | 71 | 2000 | Styrene-butadien e rubber | 2 | Terephthalic acid | 7 | 10 | 1.87 | 5.6G | 0.2 | 5 |
| **Embodime nt 22** | Aluminu m oxide | 20 | 500 | Phenolic resin prepolym er | 71 | 2000 | Styrene-butadien e rubber | 2 | Terephthalic acid | 7 | 20 | 1.86 | 7.9G | 0.007 | 5 |
| **Embodime nt 23** | Aluminu m oxide | 20 | 500 | Phenolic resin prepolym er | 71 | 2000 | Styrene-butadien e rubber | 2 | Terephthalic acid | 7 | 200 | 1.83 | 8.3G | 0.004 | 5 |
| **Embodime nt 24** | Aluminu m oxide | 20 | 500 | Phenolic resin prepolym er | 71 | 2000 | Styrene-butadien e rubber | 2 | Terephthalic acid | 7 | 1000 | 1.8 | 8.6G | 0.001 | 5 |
| **Embodime nt 25** | Aluminu m oxide | 20 | 500 | Phenolic resin prepolym er | 71 | 2000 | Styrene-butadien e rubber | 2 | Terephthalic acid | 7 | 1050 | 1.79 | 8.7G | 0.001 | 5 |

### Performance test

### 1. Test method for thermal conductivity coefficient

A test standard was GB/T10295-2008.

### 2. Test method for resistance

A dielectric strength tester was used, where a negative electrode of the dielectric strength tester was connected to the case without the thermally conductive insulating layer, and a positive electrode of the dielectric strength tester was connected to the thermally conductive insulating layer; a test was performed according to GB/T 1408.2-2016; and a resistance value was read.

### 3. Test method for leakage current

A dielectric strength tester was used, where a negative electrode of the dielectric strength tester was connected to one side of the case without the thermally conductive insulating layer, and a positive electrode of the dielectric strength tester was connected to the thermally conductive insulating layer on the case; a test was performed according to GB/T 1408.2-2016; and a resistance value was read.

### 4. Test method for corrosion condition through external experiment

The electrode assembly was assembled onto the case, the battery was charged to a 33% charged state (SOC); the negative electrode and the case was connected for conduction by using a conductor wire; still standing was performed for 10 days; and the case was disassembled to observe the corrosion condition.

### 5. Test for electrolyte solution-resistant capability

The case provided with the thermally conductive insulating layer was placed into the electrolyte solution; after the case was immersed at 60°C for 1500 h, the negative electrode of the dielectric strength tester was enabled to be in lap joint with one side of the case without the thermally conductive insulating layer, and the positive electrode was enabled to be in lap joint with the thermally conductive insulating layer on the case, a given voltage DC was 2700 V, and the test time was 60 s; whether a film layer was broken down or not was determined, and the operation was repeated for 25 times.

### 6. 4C rapid charging heat dissipation experiment

The case provided with the thermally conductive insulating layer was assembled with the electrode assembly; the battery was subjected to 10 charge-discharge cycles at a 4C magnification; and the general surface temperature of the battery was recorded.

### 7. Voltage withstanding test after immersion in electrolyte solution

The sample immersed in the electrolyte solution was taken out, and ethanol was dipped to clear the electrolyte solution remained on the surface; the dielectric strength tester was turned on, where the negative electrode was in lap joint with one side of the case without the thermally conductive insulating layer, and the positive electrode was in lap joint with the thermally conductive insulating layer on the case, the given voltage DC was 2700 V, the test time was 60 s; and whether the film layer was broken down or not was determined.

Test results of Embodiment 1 to Embodiment 25 and Comparative example 1 to Comparative example 4 are as shown in Table 2.

**Table 2**

| | **Battery** | | | |
|---|---|---|---|---|
| | **Corrosion condition in external experiment** | **General surface temperature of battery cell during 4C rapid charging/°C** | **Electrolyte solution immersion test** | **Voltage withstanding test after immersion in electrolyte solution** |
| **Comparative Example 1** | No corrosion | 59.5 | No peeling | Passed |
| **Embodiment 1** | No corrosion | 56.6 | No peeling | Passed |
| **Embodiment 2** | No corrosion | 55.1 | No peeling | Passed |
| **Embodiment 3** | No corrosion | 53.4 | No peeling | Passed |
| **Embodiment 4** | No corrosion | 51.6 | No peeling | Passed |
| **Embodiment 5** | No corrosion | 50.8 | No peeling | Passed |
| **Comparative Example 2** | No corrosion | 50.6 | No peeling | Not passed |
| **Comparative Example 3** | No corrosion | 51 | No peeling | Not passed |
| **Embodiment 6** | No corrosion | 51.3 | No peeling | Passed |
| **Embodiment 7** | No corrosion | 51.3 | No peeling | Passed |
| **Embodiment 8** | No corrosion | 51.8 | No peeling | Passed |
| **Embodiment 9** | No corrosion | 52.1 | No peeling | Passed |
| **Embodiment 10** | No corrosion | 52.5 | No peeling | Passed |
| **Embodiment 11** | No corrosion | 57.5 | No peeling | Passed |
| **Comparative Example 4** | No corrosion | 59.8 | No peeling | Passed |
| **Embodiment 12** | No corrosion | 50.9 | No peeling | Passed |
| **Embodiment 13** | No corrosion | 51.2 | No peeling | Passed |
| **Embodiment 14** | No corrosion | 51.2 | No peeling | Passed |
| **Embodiment 15** | No corrosion | 51.4 | No peeling | Passed |
| **Embodiment 16** | No corrosion | 57.1 | No peeling | Passed |
| **Embodiment 17** | No corrosion | 54.8 | No peeling | Passed |
| **Embodiment 18** | No corrosion | 50.6 | No peeling | Passed |
| **Embodiment 19** | No corrosion | 51.4 | No peeling | Passed |
| **Embodiment 20** | No corrosion | 52.0 | No peeling | Passed |
| **Embodiment 21** | No corrosion | 52.0 | No peeling | Passed |
| **Embodiment 22** | No corrosion | 52.2 | No peeling | Passed |
| **Embodiment 23** | No corrosion | 52.6 | No peeling | Passed |
| **Embodiment 24** | No corrosion | 55.6 | No peeling | Passed |
| **Embodiment 25** | No corrosion | 56.8 | No peeling | Passed |

Conclusion: through Embodiment 1 to Embodiment 25 and Comparative example 1 to Comparative example 4, it can be seen that the battery assembled with the case provided by the present application may reduce the general surface temperature of a battery cell, improve the voltage withstanding capability of the thermally conductive insulating layer, and reduce the occurrence probability of corrosion when the positive electrode current collector or the negative electrode current collector is in contact with the bottom wall of the case at the same time.

Finally, it should be noted that the above embodiments are merely used for describing the technical solutions of the present application, but are not intended to limit the present application. Although the present application is described in detail with reference to the above embodiments, it should be appreciated by those of ordinary skill in the art that modifications may still be made to the technical solutions described in the above embodiments, or equivalent replacements may be made to part or all of the technical features; and these modifications or replacements will not cause the essence of corresponding technical solutions to depart from the scope of the technical solutions of the embodiments of the present application. All of them shall be within the scopes of the claims and the specification of the present application. Especially, as long as there is no structural conflict, the various technical features mentioned in each embodiment may be combined in any way. The present application is not limited to the specific embodiments disclosed herein, but comprises all technical solutions that fall within the scope of the claims.

## Claims

1. A case, comprising: a thermally conductive insulating layer, wherein the thermally conductive insulating layer is provided on at least part of an inner surface of the case, a thermal conductivity coefficient of the thermally conductive insulating layer ranges from 0.03 W/mK to 10 W/mK, and a resistance of the thermally conductive insulating layer at a high voltage of 1000 V ranges from 100 MΩ to 100 GΩ.

2. The case according to claim 1, wherein the thermal conductivity coefficient of the thermally conductive insulating layer ranges from 0.2 W/mK to 10 W/mK, and the resistance of the thermally conductive insulating layer at the high voltage of 1000 V ranges from 500 MΩ to 50 GΩ.

3. The case according to claim 1 or 2, wherein a leakage current of the thermally conductive insulating layer ranges from 0 mA to 10 mA.

4. The case according to any one of claims 1 to 3, wherein the leakage current of the thermally conductive insulating layer ranges from 0.01 mA to 1 mA.

5. The case according to any one of claims 1 to 4, wherein the thermally conductive insulating layer comprises 1 weight part to 50 weight parts of a thermally conductive filler and 50 weight parts to 95 weight parts of a prepolymer.

6. The case according to any one of claims 1 to 5, wherein the thermally conductive insulating layer comprises 10 weight parts to 30 weight parts of the thermally conductive filler and 70 weight parts to 90 weight parts of the prepolymer.

7. The case according to claim 5 or 6, wherein the thermally conductive filler comprises one or more of inorganic particles having a dielectric constant of 5 or above and inorganic particles having ionic conductivity but storing no ions.

8. The case according to claim 7, wherein one or more of the following conditions are met:
the inorganic particles having a dielectric constant of 5 or above comprise one or more of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydrate, silicon carbide, boron carbide, aluminum nitride, silicon nitride, boron nitride, magnesium fluoride, calcium fluoride, barium fluoride, barium sulfate, aluminum magnesium silicate, lithium magnesium silicate, sodium magnesium silicate, bentonite, hectorite, zirconium titanate, barium titanate, Pb(Zr,Ti)O₃, Pb₁₋ₘLaₘZr₁₋ₙTiₙO₃, Pb(Mg_{1/3}Nb_{2/3})O₃PbTiO₃, and respective modified inorganic particles thereof, 0<m<1, and 0<n<1; and
the inorganic particles having ionic conductivity but storing no ions comprise one or more of Li₃PO₄, lithium titanium phosphate Liₓ₁Ti_{y1}(PO₄)₃, lithium titanium aluminum phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, and 0<z4<7.

9. The case according to any one of claims 5 to 8, wherein the prepolymer comprises one or more of polyimide, phenolic resin, urea resin, or epoxy resin.

10. The case according to any one of claims 5 to 9, wherein the thermally conductive insulating layer further comprises at least one of a dispersant and a curing agent.

11. The case according to claim 10, wherein one or more of the following conditions are met:
the dispersant comprises one or more of sodium carboxymethyl cellulose, styrene-butadiene rubber, polyvinylpyrrolidone, lauryl sodium sulfate, methyl anyl alcohol, polyacrylamide, or guar gum; and
the curing agent comprises one or more of hexamethylenetetramine, ethidene diamine, hexamethylenediamine, diethylenetriamine, triethylene tetramine, p-phenylenediamine, m-phenylenediamine, terephthalic acid, phenylenediacetic acid, maleic anhydride, or phthalic anhydride.

12. The case according to any one of claims 1 to 11, wherein a thickness of the thermally conductive insulating layer ranges from 1 µm to 1000 µm.

13. The case according to any one of claims 1 to 12, wherein the thickness of the thermally conductive insulating layer ranges from 20 µm to 200 µm.

14. The case according to any one of claims 1 to 13, comprising a bottom wall and a side wall, wherein the side wall is connected with an edge of the bottom wall, the bottom wall and the side wall form an accommodating cavity with an opening, and the thermally conductive insulating layer is provided on at least part of an inner surface of the side wall and the bottom wall.

15. The case according to claim 14, wherein the thermally conductive insulating layer is provided on the entire inner surface of the side wall and an entire inner surface of the bottom wall.

16. A preparation method for a case, comprising: forming a thermally conductive insulating layer on at least part of an inner surface of the case, wherein a thermal conductivity coefficient of the thermally conductive insulating layer ranges from 0.03 W/mK to 10 W/mK, and a resistance of the thermally conductive insulating layer at a high voltage of 1000 V ranges from 100 MΩ to 100 GΩ.

17. The method according to claim 16, comprising: mixing 1 weight part to 50 weight parts of a thermally conductive filler and 50 weight parts to 95 weight parts of a prepolymer with a solvent to obtain slurry, and forming the slurry onto at least part of the inner surface of the case to form the thermally conductive insulating layer.

18. The method according to claim 17, further comprising: adding at least one of a dispersant and a curing agent into the slurry to form the thermally conductive insulating layer.

19. The method according to any one of claims 16 to 18, further comprising: cleaning and activating the case before forming the thermally conductive insulating layer.

20. A battery, comprising the case according to any one of claims 1 to 15 or a case prepared by the method according to any one of claims 16 to 19.

21. The battery according to claim 20, wherein the case comprises a bottom wall and a side wall, the side wall is connected with an edge of the bottom wall, the bottom wall and the side wall form an accommodating cavity with an opening, the battery further comprises a positive electrode plate, a negative electrode plate and a separator, the positive electrode plate, the negative electrode plate and the separator are positioned in the accommodating cavity, the positive electrode plate comprises a positive electrode current collector, the negative electrode plate comprises a negative electrode current collector, the orthographic projection of the separator on the side wall is positioned in a range of the orthographic projection of the negative electrode current collector on the side wall without coincidence, or the orthographic projection of the separator on the side wall is positioned in a range of the orthographic projection of the positive electrode current collector on the side wall without coincidence; and
the thermally conductive insulating layer is provided on an inner surface of the bottom wall, and the thermally conductive insulating layer is in contact with the negative electrode current collector or the positive electrode current collector.

22. The battery according to claim 21, wherein the orthographic projection of the separator on the side wall is positioned in the range of the orthographic projection of the negative electrode current collector on the side wall without coincidence.

23. The battery according to claim 22, wherein the negative electrode current collector comprises a first region and a second region, the orthographic projection of the first region on the side wall coincides with the orthographic projection of the separator on the side wall, and the orthographic projection of the second region on the side wall is positioned in a range of the orthographic projection of the thermally conductive insulating layer on the side wall.

24. The battery according to claim 23, wherein in an extension direction of the negative electrode current collector, a length of the second region is D, and meets 1 mm≤D≤5 mm.

25. The battery according to any one of claims 22 to 24, wherein one end of the orthographic projection of the thermally conductive insulating layer on the side wall close to the opening of the accommodating cavity coincides with one end of the orthographic projection of the separator on the side wall far away from the opening of the accommodating cavity.

26. The battery according to claim 25, wherein in the extension direction of the negative electrode current collector, a height of the thermally conductive insulating layer on the side wall is H, and H≥5 mm.

27. The battery according to claim 25 or 26, wherein in the extension direction of the negative electrode current collector, the height of the thermally conductive insulating layer on the side wall is H, and 1 cm≤H≤3 cm.

28. The battery according to any one of claims 22 to 27, comprising: a top cover assembly, wherein the top cover assembly is suitable for being used for sealing the opening of the accommodating cavity; and the thermally conductive insulating layer is provided on the entire side wall, and one end of the thermally conductive insulating layer close to the top cover assembly is disposed at an interval from one end of the top cover assembly close to the case.

29. The battery according to claim 28, wherein a distance between the end of the thermally conductive insulating layer close to the top cover assembly and the end of the top cover assembly close to the case is L, and 2 mm≤L≤5 mm.

30. An electric device, comprising the battery according to any one of claims 20 to 29.
